(19) Europäisches Patentamt
European Patent Office
Office européen des brevets

(11) **EP 1 602 846 B1**

(12) **EUROPÄISCHE PATENTSCHRIFT**

(45) Veröffentlichungstag und Bekanntmachung des Hinweises auf die Patenterteilung:
**14.11.2007  Patentblatt 2007/46**

(51) Int Cl.:
*F16D 21/06* *(2006.01)*    *F16D 25/10* *(2006.01)*
*F16D 25/0638* *(2006.01)*

(21) Anmeldenummer: **04012868.8**

(22) Anmeldetag: **01.06.2004**

(54) **Kupplungsanordnung**

Clutch arrangement

Dispositif d'embrayage

(84) Benannte Vertragsstaaten:
**DE FR GB IT**

(43) Veröffentlichungstag der Anmeldung:
**07.12.2005  Patentblatt 2005/49**

(73) Patentinhaber: **BorgWarner Inc.**
**Auburn Hills, MI 48326 (US)**

(72) Erfinder: **Hauck, Hans Jürgen**
**76137 Karlsruhe (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
**DE-A1- 10 143 834      GB-A- 1 121 591**

**Beschreibung**

Die Erfindung betrifft eine Kupplungsanordnung nach dem Oberbegriff des Anspruchs 1 sowie eine Kupplungsanordnung nach dem Oberbegriff des Anspruchs 5.

Jede Kupplung weist einen Außenlamellenträger mit Außenlamellen sowie einen Innenlamellenträger mit Innenlamellen auf. Die Lamellen sind in ihrem jeweiligen Träger in axial verlaufenden Nuten geführt, so dass eine axiale Verschiebbarkeit der Lamellen gegeben ist. Die Drehmomentübertragung vom Lamellenträger zur Lamelle erfolgt formschlüssig. Bei Betätigung des Kolbens wird eine Axialkraft auf die Lamellen ausgeübt, so dass die Lamellen gegen einen Endanschlag gedrückt werden. Hierdurch wird die Kupplung geschlossen. Die Kraft zum Verstellen des Kolbens wird in der Regel mittels eines Druckmediums auf den Kolben übertragen. Die Kupplung öffnet, wenn die Kraftwirkung des Druckmediums entfällt. Der Kolben wird durch das Rückstellelement in seine Ausgangsposition zurückgeschoben

Eine Kupplungsanordnung gemäß dem Oberbegriff des Anspruchs 1 ist beispielsweise aus der GB-A-1,121,591 bekannt. Bei der aus EP-B1-0 758 434 bekannten Kupplungsanordnung ist der Betätigungskolbenraum der ersten Kupplung gebildet aus dem Außenlamellenträger der ersten Kupplung sowie dem Kolben der ersten Kupplung. Die Übertragung der Betätigungskraft auf das Lamellenpaket erfolgt direkt durch Anpressen des Kolbens an das Lamellenpaket. Eine indirekte Kraftübertragung der Betätigungskraft vom Kolben auf das Lamellenpaket ist mit der bekannten Kupplungsanordnung nicht möglich.

Die DE 102 241 06 A1 beschreibt eine Kupplungsbetätigungseinrichtung. Bei der Kupplungsbetätigungseinrichtung erfolgt die Kraftübertragung vom Kolben auf eine Anpressplatte indirekt über eine als Hebel ausgebildete Tellerfeder. Bei der bekannten Kupplung handelt es sich nicht um eine Lamellenkupplung.

Weitere Kupplungsanordnungen sind aus der GB 1,121,591 und der DE 101 43 834 A1 bekannt.

Der Erfindung liegt die Aufgabe zu Grunde, eine Kupplungsanordnung mit größerer Variabilität bereitzustellen, bei der durch einfache konstruktive Maßnahmen eine indirekte Krafteinleitung vom Kolben in das Lamellenpaket möglich ist.

Die Aufgabe wird einerseits gelöst durch eine Kupplungsanordnung mit den Merkmalen des Anspruchs 1, andererseits durch eine Kupplungsanordnung mit den Merkmalen des Anspruchs 5.

Unteransprüche Vorteilhafte Weiterbildungen sind jeweils Gegenstand abhängiger

Der Betätigungskolbenraum der ersten Kupplung ist aus dem Betätigungskolben der ersten Kupplung und dem Außenlamellenträger der zweiten Kupplung gebildet oder der Betätigungskolbenraum der zweiten Kupplung gebildet ist aus einer Scheibe und dem Betätigungskolben der zweiten Kupplung gebildet. Bei der erfindungsgemäßen Kupplungsanordnung ist die Betätigungsrichtung des Betätigungskolbens der Betätigungsrichtung des Kolbens bei der aus dem Stand der Technik bekannten Lamellenkupplung entgegengesetzt. Der sich hierdurch ergebende Freiraum oberhalb des Kolbens bietet die Möglichkeit, je nach Anwendungsfall, weitere Bauteile, beispielsweise zur indirekten Kraftübertragung, vorzusehen.

Auf Grund der Zentrifugalkraft kommt es zu einer drehzahlabhängigen Verteilung des Druckmediums in den Betätigungskolbenräumen. Hieraus resultiert eine zusätzliche axiale Kraftkomponente, die der Kraftrichtung des Betätigungskolbens überlagert ist. Diese zusätzliche axiale Kraftkomponente hat Einfluss auf den Schließ- und Öffnungsvorgang des Betätigungskolbens. Es ist daher vorgesehen, dass zumindest eine Kupplung, vorzugsweise beide Kupplungen, einen Ausgleichsraum aufweisen, über den der Änderung der Anpresskraft des Betätigungskolbens auf Grund der Drehbewegung der Kupplung entgegengewirkt wird. Die zusätzliche Axialkraft wird kompensiert, in dem der Ausgleichsraum mit Druckmedium beaufschlagt wird. Hieraus resultiert eine Kraft, die in etwa gleich groß ist, wie die zusätzliche Axialkraft und deren Richtung der Richtung der zusätzlichen Axialkraft entgegenwirkt.

Möglichst wenig Bauteile bei der Konstruktion der erfindungsgemäßen Kupplungsanordnung werden dadurch benötigt, dass der Ausgleichsraum der ersten Kupplung gebildet ist aus dem Außenlamellenträger der ersten Kupplung und dem Betätigungskolben der ersten Kupplung und/oder dadurch, dass der Ausgleichsraum der zweiten Kupplung gebildet ist aus dem Außenlamellenträger der zweiten Kupplung und dem Betätigungskolben der zweiten Kupplung.

Es ist mit Vorteil vorgesehen, dass zur Kraftübertragung vom Betätigungskolben der ersten Kupplung auf die Lamellen der ersten Kupplung mindestens ein äußerer Betätigungshebel vorgesehen ist. Über eine entsprechende Ausgestaltung des Hebels ist eine Variation der Anpresskraft bei gleichbleibendem Betätigungsdruck sowie gleichbleibender Betätigungskolbenfläche möglich. Der Einsatzbereich ein und derselben Kupplung kann bei ansonsten gleichem Aufbau lediglich durch eine veränderte Ausgestaltung des Hebels wesentlich erweitert werden. Ein weiterer Vorteil in dem Vorsehen eines Hebel zu indirekten Krafteinleitung besteht darin, dass der Hebel material- und ausgestaltungsbedingt eine gewisse Elastizität aufweist. Hierdurch ist ein weicherer Drehmomentaufbau möglich.

Im Wesentlichen dieselben Vorteile ergeben sich dadurch, dass zur Kraftübertragung vom Betätigungskolben der zweiten Kupplung auf die Lamellen der zweiten Kupplung mindestens ein innerer Betätigungshebel vorgesehen ist.

In Weiterbildung der Erfindung ist vorgesehen, dass die äußeren und/oder die inneren Betätigungshebel als, vorzugsweise zweiarmiger, Umlenkhebel ausgebildet sind, wobei vorzugsweise die Richtung der von dem Umlenkhebel auf die Lamellen ausgeübten Kraft, der Richtung der in den Umlenkhebel eingeleiteten Betätigungskraft des Betätigungskolbens entgegengesetzt ist. Durch die Umlenkung der Kraftrichtung um 360° kann die Kupplung wesentlich verkürzt ausgestaltet werden. Dabei ist der Umlenkhebel vorzugsweise als zweiarmiger Kniehebel ausgestaltet, wobei der Hebel an seinem Knie gelagert ist. Die Elastizität des Umlenkhebels ermöglicht einen weichen Momentaufbau. Weiterhin ist es erstmals möglich bei gleichbleibendem Betätigungsdruck und gleichbleibender Betätigungskolbenflächen die Anpresskraft durch eine Veränderung des Hebelverhältnisses $L_2/L_1$ zu variieren. Hierdurch wird der Einsatzbereich der Kupplung auf verschiedene Drehmomentbereiche erweitert. Dabei kann der grundsätzliche Kupplungsaufbau im Wesentlichen gleich bleiben, es muss lediglich ein anderes Hebelverhältnis gewählt werden. Weiterhin ist über die Wahl des Hebelverhältnisses die Reaktionsempfindlichkeit der Kupplung einstellbar. Je länger der kolbenseitige Arm des Umlenkhebels ausgestaltet wird, desto unempfindlicher arbeitet die Kupplung. Für den umgekehrten Fall wird die Empfindlichkeit wesentlich erhöht.

In Ausgestaltung der Erfindung sind die äußeren Betätigungshebel und/oder die inneren Betätigungshebel durch jeweils einen, vorzugsweise geschlossenen Ring miteinander verbunden. Hierdurch wird der Einbau des Umlenkhebelmechanismus in der Kupplungsanordnung wesentlich erleichtert.

Durch das gleichmäßige Verteilen der Hebel über den Umfang des Rings wird eine gleichmäßige Krafteinleitung in das jeweilige Lamellenpakte gewährleistet.

In Ausgestaltung der Erfindung wirken die Rückstellelemente zum Verfahren des Kolbens in seine Ausgangsstellung nicht direkt auf den Kolben, sondern auf den Umlenkhebel und erst dieser wirkt auf den Kolben.

Aus dem Stand der Technik ist es bekannt, als Rückstellelemente Tellerfedern vorzusehen. Diese werden im Stand der Technik als eigenständige Bauteile in die Kupplung integriert. Erfindungsgemäß ist mit Vorteil vorgesehen, dass der Ring mit den Hebeln als Rückstellelement, insbesondere als Tellerfeder, ausgebildet ist. Hierdurch entfällt das Rückstellelement als separates Bauteil.

Für den erleichterten Zusammenbau der Kupplung ist es von Vorteil, wenn Mittel zur Zentrierung des äußeren und/oder des inneren Rings vorgesehen sind. Weiterhin ist es von Vorteil, wenn Mittel zur Sicherung des jeweiligen Rings gegen Verdrehen vorgesehen sind. Erfindungsgemäß werden beide Mittel durch Laschen gebildet, die zwischen die Umlenkhebel der Ringe greifen. Dabei sind die Laschen zur Sicherung und Zentrierung des äußeren Rings mit Vorteil am Außenlamellenträger vorgesehen. Die Laschen zur Sicherung und Zentrierung des inneren Rings befinden sich am Innenlamellenträger. Alle Laschen können beispielsweise durch Stanzen und Herausbiegen aus den Lamellenträgern gebildet werden.

Zur Erhöhung der Steifigkeit der Betätigungshebel weisen diese mit Vorteil Sicken auf, die beispielsweise in diese eingeprägt sind.

Die Erfindung wird im Folgenden anhand mehrerer Ausführungsbeispiele näher erläutert.

Es zeigen:

Figur 1    in einer teilgeschnittenen Darstellung eine erfindungsgemäße Lamellen-Kupplungsanordnung mit einem der ersten Kupplung zugeordneten Umlenkhebel,

Figur 2    ein weiteres Ausführungsbeispiel der Lamellen-Kupplungsanordnung mit einem der zweiten Kupplung zugeordneten Umlenkhebel,

Figur 3    ein weiteres Ausführungsbeispiel einer Kupplungsanordnung mit zwei Umlenkhebeln,

Figur 4    einen Ring mit einer Vielzahl von Umlenkhebeln und

Figur 5    eine Darstellung des Momenten- und Kräftegleichgewichtes an einem Umlenkhebel.

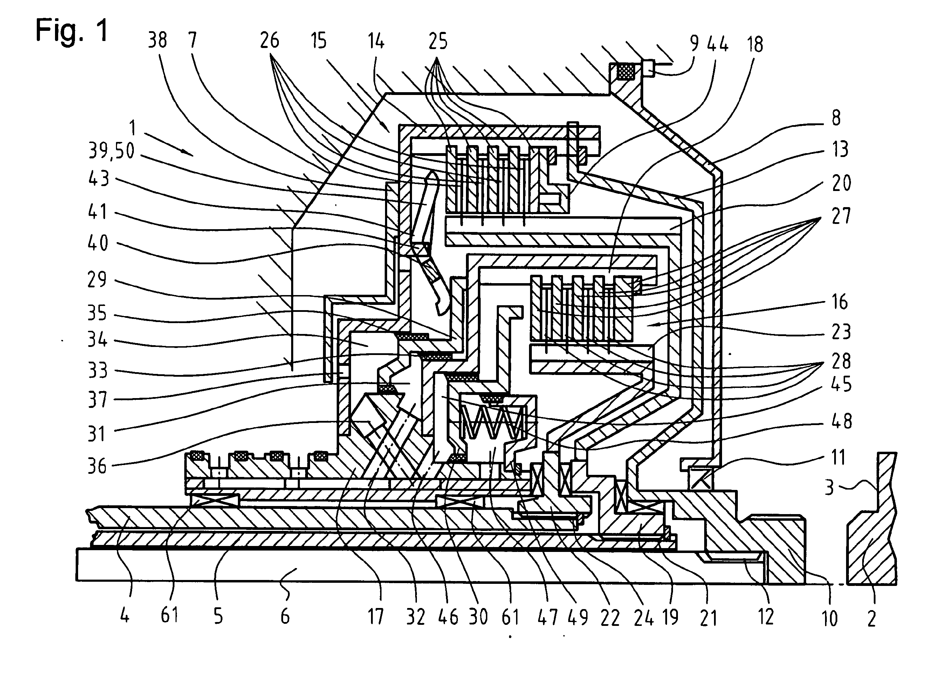

Die Figur 1 verdeutlicht schematisch anhand eines Ausschnittes aus einem beispielhaft gewählten Antriebsstrang für ein Kraftfahrzeug einen möglichen Grundaufbau und die Funktionsweise einer erfindungsgemäß gestalteten Kupplungsanordnung 1.

Auf der rechten Seite der Zeichnungsfigur ist eine Kurbelwelle 2 angedeutet, welche beispielsweise mit einem Verbrennungsmotor oder dergleichen gekoppelt ist. Diese Seite stellt die Antriebsseite des Antriebsstrangs dar.

Die Kurbelwelle 2 weist ein Koppelende 3 zur Ankopplung eines nicht dargestellten Torsionsschwingungsdämpfers auf. In der Zeichnung sind zwei nach links verlaufende koaxial angeordnete Getriebehohlwellen 4, 5 dargestellt, die wiederum koaxial zu einer zentralen Vollwelle 6 angeordnet sind. Bei der zentralen Vollwelle 6 handelt es sich um eine Pumpenantriebswelle, die zum Antrieb einer getriebeseitigen, nicht dargestellten Ölpumpe dient. Bei Vorsehen einer beispielsweise elektromotorisch angetriebenen Ölpumpe kann auf die Pumpenantriebswelle 6 verzichtet werden, oder die Pumpenantriebswelle 6 kann als Getriebeeingangswelle ausgestaltet werden.

Die Kupplungsanordnung ist in eine Getriebegehäuseglocke 7 aufgenommen, wobei der Glockeninnenraum in Richtung zur Antriebsseite durch einen Deckel 8 verschlossen ist, welcher am Glockengehäuse 7 durch einen Sprengring 9 gesichert ist.

Kupplungseingangsseitig ist eine mit der Kurbelwelle 2 gekoppelte, einstückig ausgebildete Kupplungsnabe 10 vorgesehen. Die Kupplungsnabe 10 durchdringt eine zentrale Öffnung des Deckels 8 und ist gegenüber dem Deckel 8 durch eine Ringdichtung 11 abgedichtet.

Die Pumpenantriebswelle 6 ist über eine entsprechende Verzahnung 12 formschlüssig mit der Kupplungsnabe 10 und somit mit der Kurbelwelle 2 verbunden.

Die Kupplungsnabe 10 ist drehfest mit einer äußeren Mitnehmerscheibe 13 verbunden. Über die äußere Mitnehmerscheibe 13 wird das Eingangsdrehmoment von der Kupplungsnabe 10 auf einen Außenlamellenträger 14 einer ersten Kupplung 15 übertragen. Die erste Kupplung 15 ist radial um eine zweite Kupplung 16 angeordnet.

Der Außenlamellenträger 14 erstreckt sich in Richtung Getriebe und nach radial innen zu einer Zentralnabe 17, mit welcher er drehfest verbunden ist. Die Zentralnabe 17 ist mittels einer Axial- und Radiallageranordnung an der Getriebehohlwelle 4 gelagert. An der Zentralnabe 17 ist ein weiterer Außenlamellenträger 18 der zweiten, inneren Kupplung 16 drehfest angebracht. Die Drehmomentübertragung erfolgt also von der Kurbelwelle 2 über die Kupplungsnabe 10 und die damit festverbundene äußere Mitnehmerscheibe 13 auf den Außenlamellenträger 14 der äußeren Kupplung. Von hier wird das Drehmoment über die Zentralnabe 17 auch auf den Außenlamellenträger 18 der zweiten Kupplung 16 übertragen. Die beiden Außenlamellenträger 14, 18 stellen somit jeweils die Eingangsseite der jeweiligen Kupplung 15, 16 dar.

Eine Nabe 19 eines Innenlamellenträgers 20 der äußeren Kupplung 15 ist über eine Verzahnung 21 drehfest mit der Getriebehohlwelle 5 verbunden. Dementsprechend ist eine Nabe 22 eines Innenlamellenträgers 23 der inneren Kupplung 16 drehfest über eine Verzahnung 24 mit der Hohlwelle 4 verbunden. Hieraus ergibt sich, dass die Innenlamellenträger 20, 23 die Ausgangsseite der ersten bzw. zweiten Lamellenkupplung 15, 16 bilden.

Die Außenlamellen 25 der ersten Kupplung 15 sind in Nuten des Außenlamellenträgers 14 axial verschiebbar. Die Innenlamellen 26 sind in Nuten des Innenlamellenträgers 20 der ersten Kupplung 15 axial verschiebbar. Die Drehmomentübertragung vom Lamellenträger an die Lamelle erfolgt über einen Formschluss. Entsprechend verhält es sich mit den Außenlamellen 27 und dem Außenlamellenträger 18 sowie den Innenlamellen 28 und dem Innenlamellenträger 23.

Für jede Kupplung 15, 16 ist ein Betätigungskolben 29, 30 vorgesehen. Beide Betätigungskolben 29, 30 sind axial verschiebbar. Dem Betätigungskolben 29 ist ein Betätigungskolbenraum 31 zugeordnet, welcher über einen Druckmedienkanal 32 mit einer nicht dargestellten Druckmediumquelle verbunden ist. Der Betätigungskolbenraum 31 ist durch den Betätigungskolben 29 sowie dem fixierten Außenlamellenträger 18 der zweiten Kupplung 16 gebildet. Ein Ringdichtelement 33 verhindert ein Entweichen des Druckmediums 32. Auf der dem Betätigungskolbenraum 31 gegenüberliegenden Seite des Betätigungskolbens 29 ist ein Ausgleichsraum 34 vorgesehen, der vom Außenlamellenträger 14 und dem Betätigungskolben 29 gebildet ist, wobei der Betätigungskolben 29 mit einer am Innen- und Außendurchmesser dichtenden, aufvulkanisierten Dichtung 35 versehen ist, um den Ausgleichsraum 34 zum einen gegenüber dem Betätigungskolbenraum 31 und zum anderen gegenüber der übrigen Kupplungsanordnung 1 abzudichten. Der Ausgleichsraum 34 ist über einen Druckmedienkanal 36 mit einem nicht dargestellten Druckmittelreservoir verbunden. Dabei wird das Druckausgleichsmedium in diesem Ausführungsbeispiel erst beim Betrieb der Kupplung in die Ausgleichsräume 34, 47 gefördert. Dadurch, dass der Ausgleichsraum teilweise von dem Außenlamellenträger 14 der ersten Kupplung 15 gebildet ist, ist ein vollständiger Zentrifugalstörkraftausgleich möglich. Bei entsprechender Positionierung eines Abflussfensters 37 kann sogar eine der zusätzlichen Axialkraft entgegengesetzte Ausgleichskraft erzeugt werden, die betragsmäßig größer ist, als die zusätzliche, durch die Zentrifugalkraft erzeugte, Axialkraft. Das Druckausgleichsmedium kann durch ein außen am Außenlamellenträger 14 angebrachtes Fangblech 38 in die Kupplung zurückgeführt werden.

Zwischen dem Lamellenpaket der ersten Kupplung 15 und dem Betätigungskolben 29 sind über den Umfang der Kupplung 15 verteilte Betätigungshebel 39,50 vorgesehen. Die als Umlenkhebel 50 ausgebildeten Betätigungshebel 50 sind als zweiarmiger Kniehebel ausgebildet, wobei die Betätigungshebel 39 über einen geschlossenen Ring 40 miteinander verbunden. Der Ring 40 wird über aus den Außenlamellenträger 14 herausgeführte Laschen 41 zentriert und gegen Verdrehen gesichert. Als Rückstellelement ist eine Tellerfeder vorgesehen, die aus Ring 40 mit Umlenkhebeln 39 gebildet ist. Diese stützt sich einerseits über den unteren Arm des Betätigungshebels 39 am Betätigungskolben 29 und andererseits am Knie 43 des Betätigungshebels 39 am Außenlamellenträger 14 ab und wirkt so der Betätigungsrichtung des Betätigungskolbens 29 entgegen.

Wird nun Druckmedium über den Druckmedienkanal 32 in den Betätigungskolbenraum 31 gepumpt, so bewegt sich der Betätigungskolben 29 axial in Richtung Getriebe. Durch den Umlenkhebel wird die Betätigungskolbenkraft auf die Lamellen 25, 26 der ersten Kupplung umgelenkt, wodurch diese aneinander und gegen einen Begrenzungsring 44 axial entgegen der Bewegungsrichtung des Betätigungskolbens 29 verschoben werden, so dass die Kupplung 15 geschlossen wird. Eine Kraft- bzw. Wegübersetzung lässt sich über die wirksamen Hebelarmlängen bewusst einstellen.

Auf diese Weise ist bei gleichbleibendem Betätigungsdruck innerhalb des Betätigungskolbenraums 31 und gleichbleibender Kolbenfläche eine Variation der Anpresskraft auf die Lamellen durch eine Veränderung des Hebelverhältnisses möglich. Wird nun der Druck innerhalb des Betätigungskolbenraums 31 reduziert, so bewegt sich der Kolben auf Grund der Federkraft des Rückstellelementes axial in Richtung Kurbelwelle 2. Die äußere Kupplung 15 ist nun geöffnet.

Der Betätigungskolben 30 der zweiten inneren Kupplung 16 ist ebenfalls ein Betätigungskolbenraum 45 zugeordnet. Der Betätigungskolbenraum 45 wird über einen Druckmedienkanal 46 bei Bedarf mit Druckmedium versorgt. Der Betätigungskolbenraum 45 ist gebildet durch den Außenlamellenträger 18 der inneren Kupplung 16 sowie den Betätigungskolben 29. Eine Ringdichtung dichtet den Betätigungskolbenraum 45 am äußeren Umfang ab. Auf der dem Betätigungskolbenraum 45 gegenüberliegenden Seite des inneren Betätigungskolbens 30 ist ein Ausgleichsraum 47 vorgesehen. Als Rückstellelement für den Betätigungskolben 30 sind im Ausgleichsraum 47 Spiralfedern 48 vorgesehen, die sich zum einen am Betätigungskolben 30 und zum anderen an einer den Ausgleichsraum 47 begrenzten Scheibe 49 abstützen. Die Betätigungsrichtung des Kolbens 30 verläuft ebenfalls axial, ist jedoch der Betätigungsrichtung des Betätigungskolbens 29 der ersten Kupplung entgegengesetzt. Bei Druckmediumbeaufschlagung des Betätigungskolbenraums 45 bewegt sich der Betätigungskolben 30 direkt auf die Lamellen 27, 28 der zweiten Kupplung 16 und presst diese aneinander, so dass ein Drehmoment vom Außenlamellenträger 18 zum Innenlamellenträger 23 übertragen werden kann. Bei Nachlassen des Drucks im Betätigungskolbenraum 45 wird der Betätigungskolben 30 durch die Federn 49 in seiner Ausgangsposition zurückbewegt.

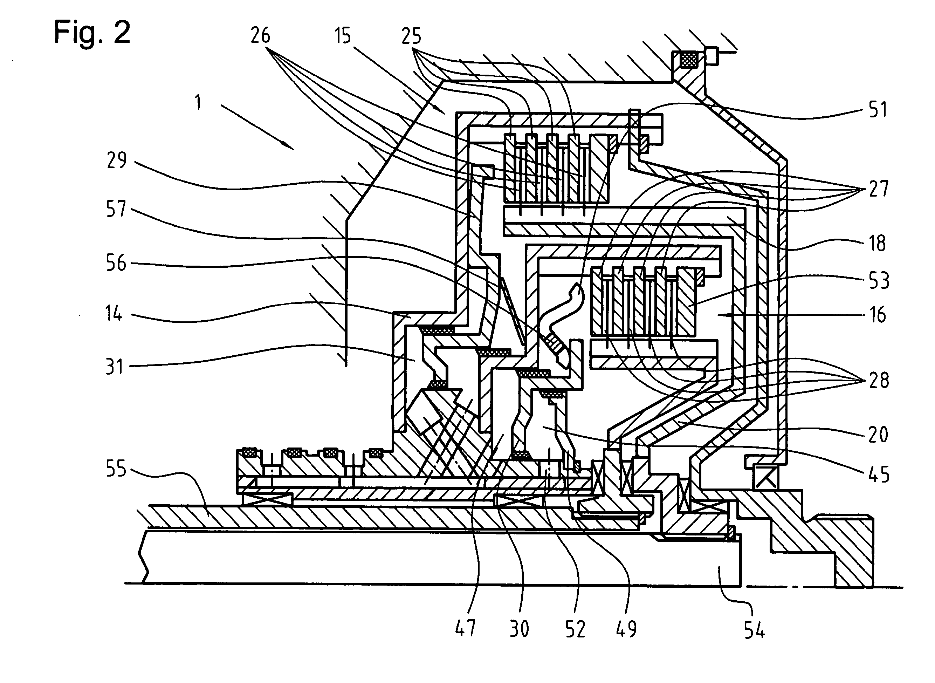

Die Kupplungsanordnung 1 in Figur 2 unterscheidet sich von der in Figur 1 dargestellten Kupplungsanordnung 1 dadurch, dass nicht die erste Kupplung 15, sondern die zweite Kupplung 16 mittels eines Umlenkhebels 51 betätigbar ist. Der Betätigungskolbenraum 45 der Kupplung 16 ist gebildet aus einer Scheibe 49 sowie dem Betätigungskolben 30 der Kupplung 16. Auf der dem Betätigungskolbenraum 45 gegenüberliegenden Seite des Betätigungskolbens 30 ist ein Ausgleichsraum 47 vorgesehen, welcher durch den Außenlamellenträger 18 der inneren Kupplung 16 und dem Betätigungskolben 30 gebildet ist. Der Betätigungskolbenraum 45 wird über einen Druckmedienkanal 52 mit Druckmittel versorgt.

Wird nun Druckmedium über den Druckmedienkanal 52 in dem Betätigungskolbenraum 47 gepumpt, so bewegt sich der Betätigungskolben 30 axial in Richtung Getriebe. Durch den Umlenkhebel 51 wird die Betätigungskolbenkraft auf die Lamellen 27, 28 der zweiten Kupplung 16 umgelenkt, wodurch diese aneinander und gegen einen Begrenzungsring 53 axial entgegen der Bewegungsrichtung des Betätigungskolbens 30 verschoben werden, so dass die Kupplung 16 geschlossen wird. Eine Kraft- bzw. Wegübersetzung lässt sich über die wirksamen Hebelarmlängen bewusst einstellen. Wird der Druck innerhalb des Betätigungskolbenraums 45 reduziert, so bewegt sich der Kolben 30 auf Grund der Federkraft des Rückstellelements, welches durch den Ring 56 gebildet ist, axial in Richtung Kurbelwelle 2. Die innere Kupplung 16 ist nun geöffnet.

Bei der in Figur 2 dargestellten Kupplungsanordnung 1 erfolgt die Kraftübertragung bei der äußeren Kupplung 15 direkt vom Betätigungskolben 29 auf die Lamellen 26, 27. In Figur 2 ist der Betätigungskolbenraum 31 der äußeren Kupplung 15 gebildet aus dem Außenlamellenträger 18 der äußeren Kupplung 15 sowie dem Betätigungskolben 29. Die Rückstellung des äußeren Betätigungskolbens 29 erfolgt über eine Tellerfeder 57.

Im Unterschied zu der in Figur 1 dargestellten Kupplungsanordnung ist bei der in Figur 2 dargestellten Kupplungsanordnung 1 keine Pumpenantriebswelle vorgesehen. Die Drehmomentübertragung von der äußeren Kupplung 15 erfolgt über den Innenlamellenträger 20 auf eine zentrale Vollwelle 54. Der Innenlamellenträger 23 der inneren Kupplung 16 ist kraftschlüssig mit einer Hohlwelle 55 verbunden, die koaxial zur Vollwelle 54 angeordnet ist.

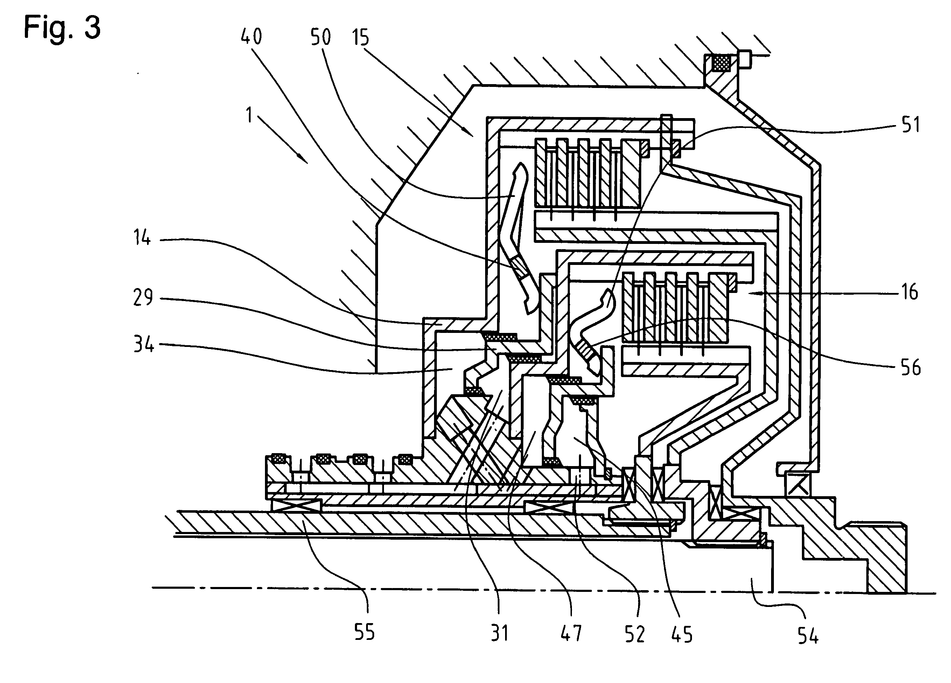

Bei der in Figur 3 dargestellten Kupplungsanordnung 1 erfolgt die Betätigung beider Kupplungen 15, 16 indirekt, nämlich über Umlenkhebel 50, 51. Der Betätigungskolbenraum 31 sowie der Ausgleichsraum 34 der äußeren Kupplung 15 sind in gleicher Weise gebildet, wie dies in Figur 1 dargestellt ist. Aufbau und Lage des Betätigungskolbenraums 45 sowie des zugehörigen Ausgleichsraums 47 der Kupplung 16 sind in analoger Weise wie in Figur 2 dargestellt aufgebaut.

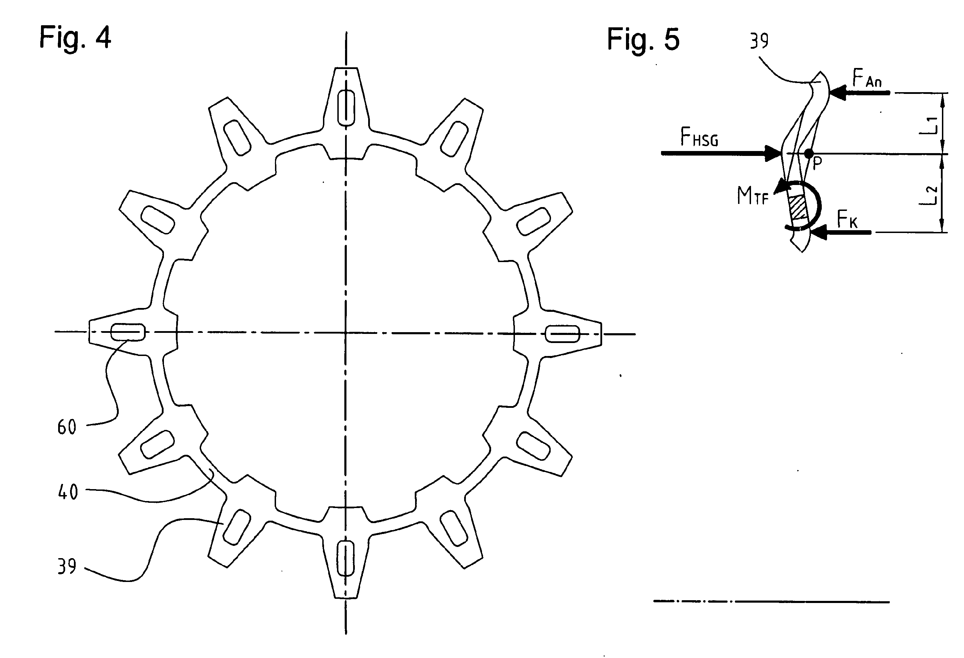

In Figur 4 ist der Umlenkhebelring 40 mit Umlenkhebeln 39 in einer Draufsicht dargestellt. Der Ring 40 ist zusammen mit den Umlenkhebeln 39 als Tellerfeder ausgebildet, so dass das Rückstellelement als separates Bauteil entfällt. Die Umlenkhebel 39 weisen eingeprägte Sicken 60 zur Erhöhung der Steifigkeit auf.

In Figur 5 ist das Momentengleichgewicht um Punkt P beschrieben. Dabei bezeichnen:

$F_K$     Betätigungskraftkolben
$F_{An}$   Anpresskraft an die Lamellen
$M_{TF}$   Tellerfederrückstellmoment
$F_{TF}$   Tellerfederkraft bezüglich Krafteinleitungsdurchmesser
$L_1$     Hebellänge des lamellenseitigen Arms des Umlenkhebels
$L_2$     Hebellänge des betätigungskolbenseitigen Arms des Umlenkhebels

Aus der Darstellung ergibt sich:

$$F_{An} = F_K \times (L_2 - M_{TF})/L_1,$$

wobei in diesem Fall für das Tellerfederrückstellmoment gilt:

$$M_{TF} = F_{TF} \times L_2.$$

Für die Reaktionskraft $F_{HSG}$ am Außenlamellenträger ergibt sich:

$$F_{HSG} = F_{An} + F_K$$

Bei gleichbleibendem Betätigungsdruck und gleichbleibender Kolbenfläche ist eine Variation der Anpresskraft durch eine Veränderung des Hebelverhältnisses $L_2/L_1$ möglich. Durch die Variation der Hebellängen lässt sich zusätzlich die Empfindlichkeit der Kupplung einstellen. Da die Umlenkhebel eine gewisse Elastizität aufweisen, lässt sich der Momentenaufbau weicher gestalten.

Bezugszeichenliste

| | |
|---|---|
| 1 | Kupplungsanordnung |
| 2 | Kurbelwelle |
| 3 | Koppelende |
| 4 | Getriebehohlwelle |
| 5 | Getriebehohlwelle |
| 6 | Vollwelle |
| 7 | Getriebegehäuseglocke |
| 8 | Deckel |
| 9 | Sprengring |
| 10 | Kupplungsnabe |
| 11 | Ringdichtung |
| 12 | Verzahnung |
| 13 | äußere Mitnehmerscheibe |
| 14 | Außenlamellenträger |
| 15 | erste äußere Kupplung |
| 16 | zweite innere Kupplung |
| 17 | Zentralnabe |
| 18 | Außenlamellenträger |
| 19 | Nabe des Innenlamellenträgers |
| 20 | Innenlamellenträger der äußeren Kupplung |
| 21 | Verzahnung |
| 22 | Nabe |
| 23 | Innenlamellenträger der inneren Kupplung |
| 24 | Verzahnung |
| 25 | Außenlamellen der äußeren Kupplung |
| 26 | Innenlamellen der äußeren Kupplung |
| 27 | Außenlamellen der inneren Kupplung |
| 28 | Innenlamellen der inneren Kupplung |
| 29 | Betätigungskolben außen |
| 30 | Betätigungskolben innen |
| 31 | Betätigungskolbenraum |
| 32 | Druckmedienkanal |
| 33 | Ringdichtelement |
| 34 | Ausgleichsraum |
| 35 | Dichtung |
| 36 | Druckmedienkanal |
| 37 | Abflussfenster |
| 38 | Fangblech |
| 39 | Betätigungshebel |
| 40 | geschlossener Ring |
| 41 | Lasche |
| 43 | Knie des Kniehebels |
| 44 | Begrenzungsring |
| 45 | Betätigungskolbenraum |
| 46 | Druckmedienkanal |
| 47 | Ausgleichsraum |
| 48 | Spiralfeder |
| 49 | Scheibe |
| 50 | Umlenkhebel |
| 51 | Umlenkhebel |
| 52 | Druckmedienkanal |
| 53 | Begrenzungsring |
| 54 | Vollwelle |
| 55 | Hohlwelle |
| 56 | geschlossener Ring |
| 57 | Tellerfeder |
| 60 | Sicken |
| p | Berechnungspunkt |
| $F_K$ | Betätigungskraftkolben |
| $F_{An}$ | Anpresskraft |
| $M_{TF}$ | Tellerfederrückstellmoment |
| $F_{TF}$ | Tellerfederkraft bezüglich Krafteinleitungsdurchmesser |
| $F_{HSG}$ | Reaktionskraft am Außenlamellenträger |
| $L_1$ | Hebellänge |
| $L_2$ | Hebellänge |

**Patentansprüche**

**1.** Kupplungsanordnung mit mindestens einer ersten (15) und mindestens einer zweiten (16) Kupplung, wobei die erste Kupplung (15) radial um die zweite Kupplung (16) angeordnet ist, jede Kupplung (15, 16) bestehend aus einem Außenlamellenträger (14, 18) mit Außenlamellen (25, 27), einem Innenlamellenträger (20, 23) mit Innenlamellen (26, 28), einem Kolben (29, 30) der direkt oder indirekt bei Betätigung die Außen- (25, 27) gegen die Innenlamellen (26, 28) drückt, mindestens einem Rückstellelement (57), welches den Kolben (29) bei Nichtbetätigung in seine Ausgangslage zurückführt, einem Betätigungskolbenraum (31, 45) zum Ausüben eines Betätigungsdruckes auf den Kolben (29, 30), wobei der Betätigungskolbenraum (31) der ersten Kupplung (15) aus dem Betätigungskolben (29) der ersten Kupplung (15) und dem Außenlamellenträger (18) der zweiten Kupplung (16) gebildet ist, **dadurch gekennzeichnet, dass** zumindest die erste Kupplung (15) einen Ausgleichsraum (34) aufweist, über den der Änderung der Anpresskraft des Betätigungskolbens (29) auf Grund der Drehbewegung der Kupplung (15) entgegen gewirkt wird, und dass der Ausgleichsraum (34) der ersten Kupplung (15) aus dem Außenlamellenträger (14) der ersten Kupplung (15) und dem Betätigungskolben (29) der ersten Kupplung (15) gebildet ist.

2. Kupplungsanordnung nach Anspruch 1,
**dadurch gekennzeichnet, dass**
die zweite Kupplung (16) einen Ausgleichsraum (47) aufweist, über den der Änderung der Anpresskraft des Betätigungskolbens (30) auf Grund der Drehbewegung der Kupplung (16) entgegen gewirkt wird.

3. Kupplungsanordnung nach Anspruch 2,
**dadurch gekennzeichnet, dass** der Ausgleichsraum (47) der zweiten Kupplung (16) aus dem Außenlamellenträger (18) der zweiten Kupplung (16) und dem Betätigungskolben (30) der zweiten Kupplung (16) gebildet ist.

4. Kupplungsanordnung nach einem der vorhergehenden Ansprüche, **dadurch gekennzeichnet, dass** der Betätigungskolbenraum (45) der zweiten Kupplung (16) aus einer Scheibe (49) und dem Betätigungskolben (30) der zweiten Kupplung (16) gebildet ist.

5. Kupplungsanordnung mit mindestens einer ersten (15) und mindestens einer zweiten (16) Kupplung, wobei die erste Kupplung (15) radial um die zweite Kupplung (16) angeordnet ist, jede Kupplung (15, 16) bestehend aus einem Außenlamellenträger (14, 18) mit Außenlamellen (25, 27), einem Innenlamellenträger (20, 23) mit Innenlamellen (26, 28), einem Kolben (29, 30) der direkt oder indirekt bei Betätigung die Außen- (25, 27) gegen die Innenlamellen (26, 28) drückt, mindestens einem Rückstellelement (57), welches den Kolben (29) bei Nichtbetätigung in seine Ausgangslage zurückführt, einem Betätigungskolbenraum (31, 45) zum Ausüben eines Betätigungsdruckes auf den Kolben (29, 30), wobei der Betätigungskolbenraum (45) der zweiten Kupplung (16) aus einer Scheibe (49) und dem Betätigungskolben (30) der zweiten Kupplung (16) gebildet, ist und wobei die zweite Kupplung (16) einen Ausgleichsraum (47) aufweist, über den der Änderung der Anpresskraft des Betätigungskolbens (30) auf Grund der Drehbewegung der Kupplung (16) entgegen gewirkt wird, **dadurch gekennzeichnet, dass** der Ausgleichsraum (47) der zweiten Kupplung (16) aus dem Außenlamellenträger (18) der zweiten Kupplung (16) und dem Betätigungskolben (30) der zweiten Kupplung (16) gebildet ist.

6. Kupplungsanordnung nach Anspruch 5,
**dadurch gekennzeichnet, dass** die erste Kupplung (15), einen Ausgleichsraum (34) aufweist, über den der Änderung der Anpresskraft des Betätigungskolbens (29) auf Grund der Drehbewegung der Kupplung (15) entgegen gewirkt wird.

7. Kupplungsanordnung nach Anspruch 6,
**dadurch gekennzeichnet, dass** der Ausgleichsraum (34) der ersten Kupplung (15) aus dem Außenlamellenträger (14) der ersten Kupplung (15) und dem Betätigungskolben (29) der ersten Kupplung (15) gebildet ist.

8. Kupplungsanordnung nach einem der vorhergehenden Ansprüche, **dadurch gekennzeichnet, dass** zur Kraftübertragung vom Betätigungskolben (29) der ersten Kupplung (15) auf die Lamellen (25, 26) der ersten Kupplung (15) mindestens ein äußerer Betätigungshebel (39) vorgesehen ist.

9. Kupplungsanordnung nach einem der vorhergehenden Ansprüche, **dadurch gekennzeichnet, dass** zur Kraftübertragung vom Betätigungskolben (30) der zweiten Kupplung (16) auf die Lamellen (27, 28) der zweiten Kupplung (16) mindestens ein innerer Betätigungshebel (51) vorgesehen ist.

10. Kupplungsanordnung nach Anspruch 8 oder 9,
**dadurch gekennzeichnet, dass** die äußeren und/oder die inneren Betätigungshebel als, vorzugsweise zweiarmiger, Umlenkhebel (50, 51) ausgebildet sind; wobei vorzugsweise die Richtung der von dem Umlenkhebel (50, 51) auf die Lamellen (25, 26, 27, 28) ausgeübten Kraft entgegengesetzt der Richtung der in den Umlenkhebel eingeleiteten Betätigungskraft des Betätigungskolbens (29, 30) gerichtet ist.

11. Kupplungsanordnung nach einem der Ansprüche 8 bis 10,
**dadurch gekennzeichnet, dass** die äußeren Betätigungshebel (39) über einen, vorzugsweise geschlossenen, äußeren Ring (40) miteinander verbunden sind.

12. Kupplungsanordnung nach einem der Ansprüche 8 bis 11,
**dadurch gekennzeichnet, dass** die inneren Betätigungshebel (51) über einen, vorzugsweise geschlossenen, inneren Ring (56) miteinander verbunden sind.

13. Kupplungsanordnung nach einem der Ansprüche 11 oder 12,
**dadurch gekennzeichnet, dass** die Betätigungshebel (50, 51), vorzugsweise gleichmäßig, über den Umfang der Ringe (40, 56) verteilt angeordnet sind.

14. Kupplungsanordnung nach einem der Ansprüche 11 bis 13,
**dadurch gekennzeichnet, dass** die Rückstellelemente so angeordnet sind, dass die Rückstellkraft entgegen der Betätigungskraft des Betätigungskolbens (29, 30) auf die Betätigungshebel (50, 51) wirkt.

15. Kupplungsanordnung nach Anspruch 14,
**dadurch gekennzeichnet, dass** die Rückstellelemente im äußeren und/oder inneren Ring integriert sind.

16. Kupplungsanordnung nach Anspruch 14 oder 15,
**dadurch gekennzeichnet, dass** als Rückstellelemente Rückstellfedern, vorzugsweise Tellerfedern, vorgesehen sind.

17. Kupplungsanordnung nach Anspruch 16,
**dadurch gekennzeichnet, dass** sich die Rückstellfedern des äußeren Rings (40) am Außenlamellenträger (14) der ersten Kupplung (15) abstützen.

18. Kupplungsanordnung nach einem der Ansprüche 11 bis 17,
**dadurch gekennzeichnet, dass** Mittel zur Zentrierung (41) des äußeren und/oder des inneren Rings vorgesehen sind.

19. Kupplungsanordnung nach einem der Ansprüche 11 bis 18,
**dadurch gekennzeichnet, dass** Mittel zur Sicherung (41) des äußeren (40) und/oder inneren Rings (56) gegen Verdrehen vorgesehen sind.

20. Kupplungsanordnung nach einem der Ansprüche 18 oder 19,
**dadurch gekennzeichnet, dass** als Mittel zur Zentrierung (41) des äußeren Rings (40) und/oder als Mittel (41) zur Sicherung des äußeren Rings (40) gegen Verdrehen Laschen am Außenlamellenträger (14) vorgesehen sind, die zwischen die Umlenkhebel (50) des äußeren Rings (40) greifen.

21. Kupplungsanordnung nach einem der Ansprüche 18 bis 20,
**dadurch gekennzeichnet, dass** als Mittel zur Zentrierung des inneren Rings (56) und/oder als Mittel zur Sicherung des inneren Rings (56) gegen Verdrehen Laschen am Innenlamellenträger vorgesehen sind, die zwischen die Umlenkhebel (51) des inneren Rings (56) greifen.

22. Kupplungsvorrichtung nach einem der Ansprüche 8 bis 21,
**dadurch gekennzeichnet, dass** die Betätigungshebel (50, 51) zur Erhöhung der Steifigkeit Sicken aufweisen.

**Claims**

1. Clutch arrangement having at least one first (15) and at least one second (16) clutch, wherein the first clutch (15) is disposed radially around the second clutch (16), each clutch (15, 16) consisting of: an outer plate carrier (14, 18) with outer plates (25, 27); an inner plate carrier (20, 23) with inner plates (26, 28); a piston (29, 30) which, in the case of actuation, directly or indirectly presses the outer plates (25, 27) against the inner plates (26, 28); at least one restoring element (57) which, in the case of non-actuation, guides the piston (29) back into its initial position; an actuating piston space (31, 45) for exerting an actuating pressure upon the piston (29, 30), the actuating piston space (31) of the first clutch (15) being constituted by the actuating piston (29) of the first clutch (15) and by the outer plate carrier (18) of the second clutch (16),
**characterized in that**
at least the first clutch (15) has a compensation space (34), by means of which the change in the contact force of the actuating piston (29) resulting from the rotary motion of the clutch (15) is countered, and the compensation space (34) of the first clutch (15) is constituted by the outer plate carrier (14) of the first clutch (15) and by the actuating piston (29) of the first clutch (15).

2. Clutch arrangement according to Claim 1,
**characterized in that**
the second clutch (16) has a compensation space (47), by means of which the change in the contact force of the actuating piston (30) resulting from the rotary motion of the clutch (16) is countered.

3. Clutch arrangement according to Claim 2,
**characterized in that**
the compensation space (47) of the second clutch (16) is constituted by the outer plate carrier (18) of the second clutch (16) and by the actuating piston (30) of the second clutch (16).

4. Clutch arrangement according to any one of the preceding claims,
**characterized in that**
the actuating piston space (45) of the second clutch (16) is constituted by a disc (49) and by the actuating piston (30) of the second clutch (16).

5. Clutch arrangement having at least one first (15) and at least one second (16) clutch, wherein the first clutch (15) is disposed radially around the second clutch (16), each clutch (15, 16) consisting of: an outer plate carrier (14, 18) with outer plates (25, 27); an inner plate carrier (20, 23) with inner plates (26, 28); a piston (29, 30) which, in the case of actuation, directly or indirectly presses the outer plates (25, 27) against the inner plates (26, 28); at least one restoring element (57) which, in the case of non-actuation, guides the piston (29) back into its initial position; an actuating piston space (31, 45) for exerting an actuating pressure upon the piston (29, 30), the actuating piston space (45) of the second clutch (16) being constituted by a disc (49) and by the actuating piston (30) of the second clutch (16), and the second clutch (16) having a compensation space (47), by means of which the change in the contact force of the actuating piston (30) resulting from the rotary motion of the clutch (16) is countered,
**characterized in that**
the compensation space (47) of the second clutch (16) is constituted by the outer plate carrier (18) of the second clutch (16) and by the actuating piston (30) of the second clutch (16).

6. Clutch arrangement according to Claim 5,
**characterized in that**
the first clutch (15) has a compensation space (34), by means of which the change in the contact force of the actuating piston (29) resulting from the rotary motion of the clutch (15) is countered.

7. Clutch arrangement according to Claim 6,
**characterized in that**
the compensation space (34) of the first clutch (15) is constituted by the outer plate carrier (14) of the first clutch (15) and by the actuating piston (29) of the first clutch (15).

8. Clutch arrangement according to any one of the preceding claims,
**characterized in that**
at least one outer actuating lever (39) is provided for the transmission of force from the actuating piston (29) of the first clutch (15) to the plates (25, 26) of the first clutch (15).

9. Clutch arrangement according to any one of the preceding claims,
**characterized in that**
at least one inner actuating lever (51) is provided for the transmission of force from the actuating piston (30) of the second clutch (16) to the plates (27, 28) of the second clutch (16).

10. Clutch arrangement according to either of Claims 8 or 9,
**characterized in that**
the outer and/or the inner actuating levers are realized as a, preferably two-arm, reversing lever (50, 51), the direction of the force exerted by the reversing lever (50, 51) upon the plates (25, 26, 27, 28) being oriented contrary to the direction of the actuating force of the actuating piston (29, 30) applied to the reversing lever.

11. Clutch arrangement according to any one of Claims 8 to 10,
**characterized in that**
the outer actuating levers (39) are connected to each other via a, preferably closed, outer ring (40).

12. Clutch arrangement according to any one of Claims 8 to 11,
**characterized in that**
the inner actuating levers (51) are connected to each other via a, preferably closed, inner ring (56).

13. Clutch arrangement according to either of claims 11 or 12,
**characterized in that**
the actuating levers (50, 51) are distributed, preferably uniformly, over the circumference of the rings (40, 56).

14. Clutch arrangement according to any one of Claims 11 to 13,
**characterized in that**
the restoring elements are so disposed that the restoring force acts contrary to the actuating force of the actuating piston (29, 30) upon the actuating levers (50, 51).

15. Clutch arrangement according to Claim 14,
**characterized in that**
the restoring elements are integrated in the outer and/or inner ring.

16. Clutch arrangement according to either of Claims 14 or 15,
**characterized in that**
restoring springs, preferably disc springs, are provided as restoring elements.

17. Clutch arrangement according to Claim 16,
**characterized in that**
the restoring springs of the outer ring (40) bear on the outer plate carrier (14) of the first clutch (15).

18. Clutch arrangement according to any one of Claims 11 to 17,
**characterized in that**
means are provided for centring (41) the outer and/or the inner ring.

19. Clutch arrangement according to any one of Claims 11 to 18,
**characterized in that**
means are provided for securing (41) the outer (40) and/or the inner ring (56) against rotation.

20. Clutch arrangement according to either of Claims 18 or 19,
**characterized in that**

lugs, which engage between the reversing levers (50) of the outer ring (40), are provided as means for centring (41) the outer ring (40) and/or as means for securing (41) the outer ring (40) against rotation.

21. Clutch arrangement according to any one of Claims 18 to 20,
**characterized in that**
lugs, which engage between the reversing levers (51) of the inner ring (56), are provided as means for centring the inner ring (56) and/or as means for securing the inner ring (56) against rotation.

22. Clutch arrangement according to any one of Claims 8 to 21,
**characterized in that**
the actuating levers (50, 51) have beadings to increase the stiffness.

## Revendications

1. Dispositif d'embrayage comprenant au moins un premier embrayage (15) et au moins un deuxième embrayage (16), le premier embrayage (15) étant disposé radialement autour du deuxième embrayage (16), chaque embrayage (15, 16) étant composé d'un support de lamelles extérieures (14, 18) avec des lamelles extérieures (25, 27), d'un support de lamelles intérieures (20, 23) avec des lamelles intérieures (26, 28), d'un piston (29, 30) qui, lors de l'actionnement, presse directement ou indirectement les lamelles extérieures (25, 27) contre les lamelles intérieures (26, 28), au moins un élément de rappel (57) ramenant le piston (29) à sa position initiale en cas de non actionnement, d'un espace pour piston d'actionnement (31, 45) pour exercer une pression d'actionnement sur le piston (29, 30), l'espace pour piston d'actionnement (31) du premier embrayage (15) étant formé du piston d'actionnement (29) du premier embrayage (15) et du support de lamelles extérieures (18) du deuxième embrayage (16), **caractérisé en ce qu'**au moins le premier embrayage (15) présente un espace d'équilibrage (34), par l'intermédiaire duquel on agit à l'encontre de la modification de la force de pressage du piston d'actionnement (29) du fait du mouvement rotatif de l'embrayage (15), et **en ce que** l'espace d'équilibrage (34) du premier embrayage (15) est composé du support de lamelles extérieures (14) du premier embrayage (15) et du piston d'actionnement (29) du premier embrayage (15).

2. Dispositif d'embrayage selon la revendication 1, **caractérisé en ce que** le deuxième embrayage (16) présente un espace d'équilibrage (47), par l'intermédiaire duquel on agit à l'encontre de la modification de la force de pressage du piston d'actionnement (30), du fait du mouvement rotatif de l'embrayage (16).

3. Dispositif d'embrayage selon la revendication 2, **caractérisé en ce que** l'espace d'équilibrage (47) du deuxième embrayage (16) est formé du support de lamelles extérieures (18) du deuxième embrayage (15) et du piston d'actionnement (30) du deuxième embrayage (16).

4. Dispositif d'embrayage selon l'une des revendications précédentes, **caractérisé en ce que** l'espace pour piston d'actionnement (45) du deuxième embrayage (16) est formé d'un disque (49) et du piston d'actionnement (30) du deuxième embrayage (16).

5. Dispositif d'embrayage comprenant au moins un premier embrayage (15) et au moins un deuxième embrayage (16), le premier embrayage (15) étant disposé radialement autour du deuxième embrayage (16), chaque embrayage (15, 16) étant composé d'un support de lamelles extérieures (14, 18) avec des lamelles extérieures (25, 27), d'un support de lamelles intérieures (20, 23) avec des lamelles intérieures (26, 28), d'un piston (29, 30) qui, lors de l'actionnement, presse directement ou indirectement les lamelles extérieures (25, 27) contre les lamelles intérieures (26, 28), au moins un élément de rappel (57) ramenant le piston (29) à sa position initiale en cas de non actionnement, d'un espace pour piston d'actionnement (31, 45) pour exercer une pression d'actionnement sur le piston (29, 30), l'espace pour piston d'actionnement (45) du deuxième embrayage (16) étant formé d'un disque (49) et du piston d'actionnement (30) du deuxième embrayage (16) et le deuxième embrayage (16) présentant un espace d'équilibrage (40), par l'intermédiaire duquel on agit à l'encontre de la modification de la force de pressage du piston d'actionnement (30) du fait du mouvement rotatif de l'embrayage (16),
**caractérisé en ce que** l'espace d'équilibrage (47) du deuxième embrayage (16) est formé du support de lamelles extérieures (18) du deuxième embrayage (16) et du piston d'actionnement (30) du deuxième embrayage (16).

6. Dispositif d'embrayage selon la revendication 5, **caractérisé en ce que** le premier embrayage (15) présente un espace d'équilibrage (34), par l'intermédiaire duquel on agit à l'encontre de la modification de la force de pressage du piston d'actionnement (29), du fait du mouvement rotatif de l'embrayage (15).

7. Dispositif d'embrayage selon la revendication 6, **caractérisé en ce que** l'espace d'équilibrage (34) du premier embrayage (15) est formé du support de lamelles extérieures (14) du premier embrayage (15) et du piston d'actionnement (29) du premier embrayage (15).

8. Dispositif d'embrayage selon l'une des revendications précédentes, **caractérisé en ce qu'**au moins un levier d'actionnement (39) extérieru est prévu pour assurer la transmission des efforts du piston d'actionnement (29) du premier embrayage (15) aux lamelles (25, 26) du premier embrayage (15).

9. Dispositif d'embrayage selon l'une des revendications précédentes, **caractérisé en ce qu'**au moins un levier d'actionnement (51) intérieur est prévu pour assurer la transmission des efforts du piston d'actionnement (30) du deuxième embrayage (16) aux lamelles (27, 28) du deuxième embrayage (16).

10. Dispositif d'embrayage selon la revendication 8 ou 9, **caractérisé en ce que** le levier d'actionnement extérieur et/ou le levier d'actionnement intérieur sont réalisés sous la forme de leviers de renvoi (50, 51), de préférence à deux bras, sachant que, de préférence, le sens de la force exercée par le levier de renvoi (50, 51) sur les lamelles (25, 26, 27, 28) est à l'opposé du sens de la force d'actionnement, induite dans le levier de renvoi, du piston d'actionnement (29, 30).

11. Dispositif d'embrayage selon l'une des revendications 8 à 10, **caractérisé en ce que** les leviers d'actionnement extérieurs (39) sont reliés ensemble par un anneau extérieur (40), de préférence, fermé.

12. Dispositif d'embrayage selon l'une des revendications 8 à 11, **caractérisé en ce que** les leviers d'actionnement intérieurs (51) sont reliés ensemble par un anneau intérieur (56), de préférence, fermé.

13. Dispositif d'embrayage selon l'une des revendications 11 ou 12, **caractérisé en ce que** les leviers d'actionnement (50, 51) sont répartis, de préférence régulièrement, sur la périphérie des anneaux (40, 56).

14. Dispositif d'embrayage selon l'une des revendications 11 à 13, **caractérisé en ce que** les éléments de rappel sont disposés de manière que la force de rappel agisse à l'encontre de la force d'actionnement du piston d'actionnement (29, 30) sur les leviers d'actionnement (50, 51).

15. Dispositif d'embrayage selon la revendication 14, **caractérisé en ce que** les éléments de rappel sont intégrés dans l'anneau extérieur et/ou intérieur.

16. Dispositif d'embrayage selon la revendication 14 ou 15, **caractérisé en ce que** des ressorts de rappel, de préférence des ressorts à disques, sont prévus en tant qu'éléments de rappel.

17. Dispositif d'embrayage selon la revendication 16, **caractérisé en ce que** les ressorts de rappel de l'anneau extérieur (40) prennent appui sur le support de lamelles extérieures (14) du premier embrayage (15).

18. Dispositif d'embrayage selon l'une des revendications 11 à 17, **caractérisé en ce que** des moyens sont prévus pour assurer le centrage (41) de l'anneau extérieur et/ou de l'anneau intérieur.

19. Dispositif d'embrayage selon l'une des revendications 11 à 18, **caractérisé en ce que** des moyens sont prévus pour assurer la sécurité (41) en rotation de l'anneau extérieur (40) et/ou de l'anneau intérieur (56).

20. Dispositif d'embrayage selon l'une des revendications 18 ou 19, **caractérisé en ce que** des pattes, s'engageant entre les leviers de renvoi (50) de l'anneau extérieur (40), sont prévues sur le support de lamelles extérieures (14), pour servir de moyens de centrage (41) à l'anneau extérieur (40) et/ou servir de moyens (41) pour assurer l'anneau extérieure (40) contre toute rotation.

21. Dispositif d'embrayage selon l'une des revendications 18 à 20, **caractérisé en ce que** des pattes, s'engageant entre les leviers de renvoi (51) de l'anneau intérieur (56), sont prévues sur le support de lamelles intérieures, pour servir de moyens de centrage de l'anneau intérieure (56) et/ou servir de moyens pour assurer l'anneau extérieure (56) contre toute rotation.

22. Dispositif d'embrayage selon l'une des revendications 8 à 21, **caractérisé en ce que** les leviers d'actionnement (50, 51) présentent des moulures, afin d'augmenter la rigidité.

Fig. 1

EP 1 602 846 B1

Fig. 2

EP 1 602 846 B1

Fig. 3

EP 1 602 846 B1

Fig. 5

Fig. 4

**EP 1 602 846 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- GB 1121591 A
- EP 0758434 B1
- DE 10224106 A1
- DE 10143834 A1